# FASCICULE DE BREVET EUROPEEN

(11) **EP 2 785 543 B1**
(45) Date de publication et mention de la délivrance du brevet: **04.10.2017**
(21) Numéro de dépôt: 12790865.5
(22) Date de dépôt: 19.11.2012
(51) Int. Cl.: B60H 1/00, B60H 1/32

(54) **CIRCUIT COMPRENANT UN ECHANGEUR INTERNE DONT UNE BRANCHE EST PARCOURUE PAR UN FLUIDE REFRIGERANT SELON DEUX SENS OPPOSES**
SCHALTUNG MIT EINEM INTERNEN WÄRMETAUSCHER MIT EINER VERZWEIGUNG FÜR EIN IN ZWEI RICHTUNGEN STRÖMENDES KÜHLMITTEL
CIRCUIT INCLUDING AN INTERNAL HEAT EXCHANGER, THROUGH ONE BRANCH OF WHICH A COOLANT FLOWS IN TWO OPPOSITE DIRECTIONS

(30) Priorité: 30.11.2011 FR 1103650
(43) Date de publication de la demande: 08.10.2014
(73) Titulaire: VALEO SYSTEMES THERMIQUES, 78320 Le Mesnil Saint-Denis (FR)
(72) Inventeur: YAHIA, Mohamed, 75005 Paris (FR); NICOLAS, Bertrand, 92150 Suresnes (FR); THUEZ, Jean-Luc, 78112 Fourqueux (FR)
(74) Mandataire: Tran, Chi-Hai
(86) Numéro de dépôt international: PCT/EP2012/072956
(87) Numéro de publication internationale: WO 2013/079342

(56) Documents cités:
- WO-A1-2004/030957
- DE-A1- 10 158 104
- FR-A1- 2 937 589

## Description

Le secteur technique de la présente invention est celui des ensembles ou systèmes utilisés pour conditionner un flux d'air entrant dans un habitacle de véhicule automobile. Plus particulièrement, l'invention vise un circuit de fluide réfrigérant utilisé au moins en mode de chauffage, ou pompe à chaleur, et en mode de refroidissement. L'invention optimise l'utilisation d'un échangeur interne en fonction des modes de fonctionnement.

Un véhicule automobile est classiquement équipé d'une boucle ou circuit de climatisation à l'intérieur de laquelle circule un fluide frigorigène. Cette boucle comprend classiquement un compresseur, un condenseur, un détendeur et un évaporateur parcourus dans cet ordre par le fluide frigorigène. L'évaporateur est installé dans une installation de ventilation, chauffage et/ou climatisation généralement montée dans l'habitacle du véhicule pour fournir à ce dernier un flux d'air chaud ou un flux d'air froid en fonction d'une demande de l'utilisateur du véhicule. Le condenseur est quant à lui classiquement installé en face avant du véhicule pour être traversé par le flux d'air extérieur au véhicule.

Cette boucle de climatisation peut être utilisée en mode de refroidissement ou en mode de chauffage. En mode de refroidissement, le fluide réfrigérant est envoyé vers le condenseur où le fluide réfrigérant est refroidi par le flux d'air extérieur. Puis, le fluide réfrigérant circule vers le détendeur où il subit un abaissement de sa pression avant d'entrer dans l'évaporateur. Le fluide réfrigérant traversant l'évaporateur est alors chauffé par le flux d'air entrant dans l'installation de ventilation, ce qui se traduit corrélativement par un refroidissement de ce flux d'air dans le but de climatiser l'habitacle du véhicule. Le circuit étant une boucle fermée, le fluide réfrigérant retourne alors vers le compresseur.

En mode de chauffage, le fluide est mis en circulation par le compresseur qui l'envoie vers l'évaporateur. Ce dernier se comporte alors comme un condenseur, où le fluide réfrigérant est refroidi par l'air circulant dans l'installation de ventilation. Cet air se chauffe donc au contact de l'évaporateur et apporte ainsi des calories à l'habitacle du véhicule. Après passage dans l'évaporateur, le fluide réfrigérant est détendu par un détendeur avant d'arriver dans le condenseur. Le flux d'air extérieur chauffe alors le fluide réfrigérant. Le flux d'air extérieur est par conséquent plus froid après son passage dans le condenseur comparé à sa température avant son passage au travers du condenseur. Le fluide réfrigérant retourne alors vers le compresseur.

Une telle organisation a été améliorée en complétant la boucle de climatisation présentée ci-dessus par l'ajout d'un échangeur supplémentaire traversé par le fluide réfrigérant et dont la fonction est de chauffer l'air envoyé dans l'habitacle. Ainsi, cet échangeur dit « intérieur » se comporte comme un radiateur. Le document DE 101 58 104, qui est considéré comme l'art antérieur le plus proche, divulgue un tel circuit de fluide réfrigérant. Il est connu que l'intégration d'un échangeur interne dans une telle boucle améliore les performances thermodynamiques de celle-ci quand elle est opérée en mode de refroidissement.

Un circuit haute pression de l'échangeur interne tend à élever la température du fluide réfrigérant qui circule dans le circuit basse pression de l'échangeur interne. En mode chauffage, un tel échangeur interne provoque une augmentation de la température du fluide réfrigérant qui pénètre dans le compresseur.

Une telle situation présente un premier inconvénient. En effet, la combinaison de l'efficacité de l'échangeur interne avec le fonctionnement en mode de chauffage du circuit de climatisation provoque une surchauffe du fluide réfrigérant à l'entrée du compresseur. Cette surchauffe impacte la température de ce fluide réfrigérant en sortie de compresseur, de sorte que le niveau de température atteint à la sortie du compresseur peut endommager les composants du circuit, en premier lieu le compresseur.

Un deuxième inconvénient découle de la boucle présentée ci-dessus. Le fonctionnement en mode de chauffage peut entraîner un givrage de l'échangeur extérieur. Pour le dégivrer, il est connu d'opérer la boucle en mode de refroidissement de manière à envoyer le fluide réfrigérant à haute température dans cet échangeur extérieur. Or, le temps nécessaire à cette opération de dégivrage est aujourd'hui trop long.

Le but de la présente invention est donc de résoudre les inconvénients décrits ci-dessus principalement en étant en mesure d'adapter la pression du fluide réfrigérant à l'intérieur d'une des passes de l'échangeur interne quel que soit le sens de circulation du fluide réfrigérant à l'intérieur de la passe concernée. Une telle adaptation de la pression est opérée par le premier organe de détente et/ou par le deuxième organe de détente.

L'invention a donc pour objet un circuit apte à être parcouru par un fluide réfrigérant, comprenant un compresseur, un premier échangeur intérieur destiné à chauffer un flux d'air intérieur envoyé dans un habitacle de véhicule automobile, un deuxième échangeur intérieur destiné à chauffer ou refroidir ledit flux d'air intérieur, un échangeur interne comprenant une première branche apte à être parcourue par le fluide réfrigérant qui échange thermiquement avec une deuxième branche de l'échangeur interne apte à être parcourue par le fluide réfrigérant, et un échangeur extérieur, comprenant des moyens agencés pour inverser le sens de circulation du fluide réfrigérant dans la première branche de l'échangeur interne, un premier organe de détente étant raccordé à un premier orifice de la première branche et un deuxième organe de détente est raccordé à un deuxième orifice de la première branche, caractérisé en ce qu'un troisième organe de détente est installé entre une sortie du premier échangeur intérieur et une entrée du deuxième échangeur intérieur. Selon une première caractéristique de l'invention, les moyens sont agencés pour inverser le sens de circulation du fluide réfrigérant dans l'échangeur extérieur.

Selon une deuxième caractéristique de l'invention, les moyens sont agencés pour inverser le sens de circulation du fluide réfrigérant dans le deuxième échangeur intérieur.

Selon une autre caractéristique de l'invention, les moyens comprennent exclusivement des vannes deux voies.

Selon encore une caractéristique de l'invention, le premier organe de détente et le deuxième organe de détente sont réversibles.

Avantageusement, le circuit comprend un canal installé en parallèle avec le deuxième échangeur intérieur, et avantageusement de la portion du circuit comprenant le deuxième échangeur intérieur et la troisième vanne.

Avantageusement encore, les moyens sont agencés pour que le fluide réfrigérant circule dans un même sens de circulation au sein de la deuxième branche de l'échangeur interne.

L'invention couvre également un procédé de commande d'un circuit tel qu'évoqué ci-dessus, dans lequel les moyens sont commandés pour que le fluide réfrigérant circule selon un premier sens de circulation dans la première branche de l'échangeur interne quand le circuit fonctionne selon un mode de refroidissement de l'air envoyé dans l'habitacle, et dans un deuxième sens opposé au premier sens quand le circuit fonctionne au moins en un mode de chauffage de l'air envoyé dans l'habitacle.

Selon une première caractéristique du procédé, le circuit fonctionne en un mode de déshumidification de l'air envoyé dans l'habitacle et en un mode de post-refroidissement, la première branche de l'échangeur interne étant parcourue selon le deuxième sens.

Un tout premier avantage selon l'invention réside dans la possibilité d'assurer la fonction de chauffage de l'habitacle au moyen du circuit de climatisation utilisé en mode pompe à chaleur toute en réduisant la température du fluide réfrigérant à l'entrée du compresseur. Ceci permet d'utiliser le compresseur à une vitesse et/ou un taux de compression élevé bien que le circuit soit opéré en mode de chauffage.

Un autre avantage réside dans la possibilité d'inverser le sens de circulation du fluide réfrigérant dans l'échangeur extérieur entre le mode de refroidissement et le mode de chauffage. Il est alors possible de faire entrer le fluide réfrigérant à haute température en mode de refroidissement par un orifice de l'échangeur extérieur où le fluide réfrigérant est le plus froid en mode de chauffage. Ainsi, le point le plus froid en sortie de l'échangeur extérieur en mode de chauffage, où le givre est le plus important, devient le point le plus chaud en mode de refroidissement. On accélère ainsi très nettement l'opération de dégivrage de l'échangeur de face avant.

D'autres caractéristiques, détails et avantages de l'invention ressortiront plus clairement à la lecture de la description donnée ci-après à titre indicatif en relation avec des dessins dans lesquels :
- la figure 1 est un schéma représentant le circuit selon l'invention,
- la figure 2 est un schéma illustrant le circuit selon l'invention opéré en un mode de refroidissement,
- la figure 3 est un schéma illustrant le circuit selon l'invention opéré en un premier mode de chauffage,

- la figure 4 est un schéma illustrant le circuit selon l'invention opéré en un deuxième mode de chauffage,
- la figure 5 est un schéma illustrant le circuit selon l'invention opéré en un mode récupératif,
- la figure 6 est un schéma illustrant le circuit selon l'invention opéré en un mode de déshumidification,
- la figure 7 est un schéma illustrant le circuit selon l'invention opéré en un mode de post-refroidissement,
- la figure 8 est un schéma illustrant un mode de réalisation du circuit selon l'invention.

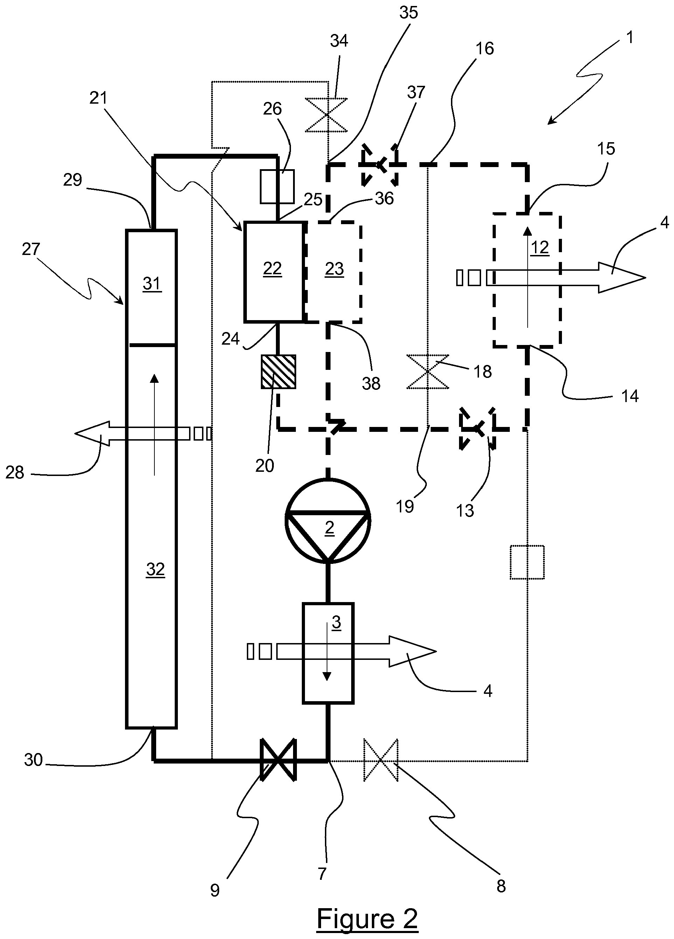

Sur les figures 2 à 7, les traits en pointillés représentent les parties du circuit 1, autrement appelé boucle de climatisation, dans lesquelles circule un fluide réfrigérant à basse pression, comparativement aux traits forts qui représentent les parties de la boucle de climatisation dans lesquelles circule ce même fluide à haute pression, c'est-à-dire une valeur de pression plus élevée que la valeur de la basse pression du fluide. Les traits interrompus représentent les portions du circuit où règne une pression intermédiaire de fluide réfrigérant, comprise entre la haute pression et la basse pression. Enfin, les traits fins en pointillé illustrent les portions du circuit 1 qui ne sont pas empruntées par le fluide réfrigérant au cours du mode de fonctionnement considéré.

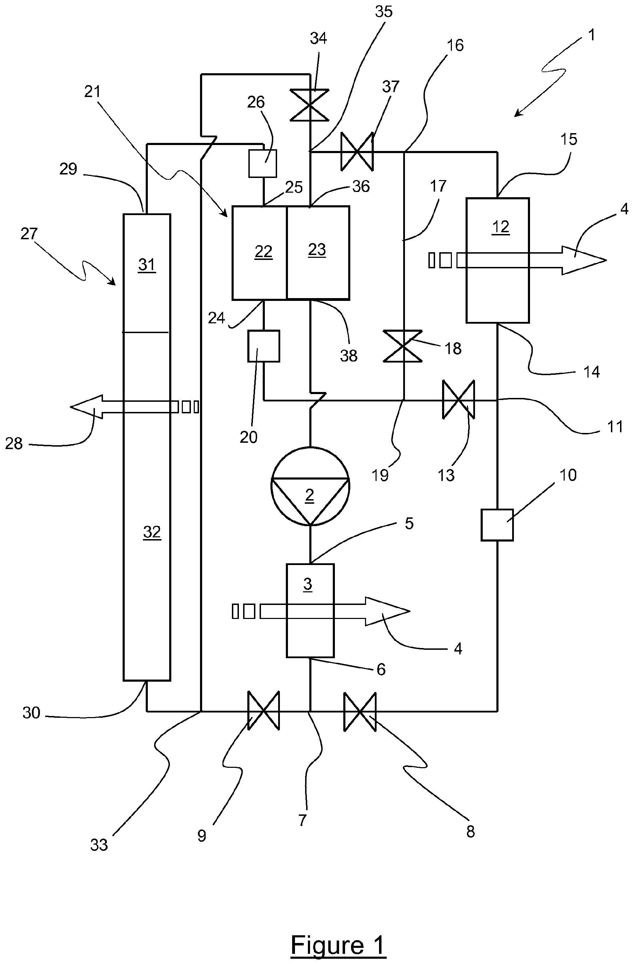

Sur les figures 1 à 8, il est représenté le circuit 1 de fluide réfrigérant qui participe au conditionnement thermique d'un habitacle de véhicule automobile. Ce circuit coopère avec un système de ventilation, de chauffage et/ou de climatisation (non représenté) destiné à modifier les paramètres aérothermiques de l'air contenu à l'intérieur de l'habitacle du véhicule. Une telle modification est obtenue à partir de la délivrance d'au moins un flux d'air pulsé à l'intérieur de l'habitacle, ci-après appelé flux d'air intérieur. A cet effet, le système de ventilation, de chauffage et/ou de climatisation comprend un boîtier, réalisé en matière plastique, qui loge un pulseur pour faire circuler le flux d'air intérieur depuis au moins une bouche d'admission d'air vers au moins une bouche de délivrance d'air que comporte le boîtier. Un tel système de ventilation, de chauffage et/ou de climatisation est logé sous une planche de bord du véhicule et canalise la circulation du flux d'air intérieur.

Le circuit 1 contient ou canalise un fluide réfrigérant et ce circuit est opéré selon un cycle thermodynamique qui permet d'apporter des calories (modes de chauffage et mode de post-refroidissement) ou des frigories (mode de refroidissement ou de déshumidification) permettant au circuit de chauffer ou de refroidir le flux d'air intérieur.

Pour ce faire, la boucle de climatisation comporte plusieurs échangeurs thermiques entre le fluide réfrigérant et soit de l'air, soit un fluide caloporteur circulant dans un circuit distinct, un tel fluide étant par exemple de l'eau comportant du glycol.

De préférence, le fluide réfrigérant est du type d'un fluide super-critique, tel que du dioxyde de carbone, par exemple, connu sous l'appellation R744. Il peut aussi être un fluide sous-critique, tel que l'hydrofluorocarbone connu sous le terme R134a ou un fluide frigorigène à faible nuisance sur l'effet de serre, c'est-à-dire qui soit en mesure d'offrir une solution durable pour les climatiseurs automobiles, connu sous la dénomination R1234yf.

Le circuit 1 représenté sur la figure 1 comprend un compresseur 2 pour comprimer le fluide réfrigérant à l'état gazeux. Immédiatement en aval du compresseur 2, on trouve un premier échangeur intérieur 3 dont la fonction est d'assurer un échange thermique en vue d'influencer directement ou indirectement la température du flux d'air intérieur 4 envoyé dans l'habitacle. Cet échangeur de chaleur réalise ainsi un échange thermique entre le fluide réfrigérant à haute pression et haute température qui passe en son sein et le flux d'air intérieur 4 qui le traverse, ou un fluide liquide caloporteur, ce premier échangeur intérieur étant logé dans le boîtier de l'installation de ventilation, chauffage et/ou climatisation. Ce premier échangeur 3 prend une fonction de refroidisseur de gaz ou condenseur dans chacun des modes de fonctionnement qui seront détaillés ci-dessous. Ce premier échangeur intérieur 3 comprend enfin une entrée 5 raccordée directement à une sortie du compresseur, et une sortie 6 raccordée à un premier point de bifurcation 7.

Ce premier point de bifurcation 7 forme un « T » du point de vue du fluide réfrigérant et il est raccordé d'un côté à une première vanne 8 et de l'autre à une deuxième vanne 9.

La première vanne 8 est par exemple une vanne deux voies tout ou rien qui est raccordée directement à un moyen de détente du fluide réfrigérant, ci-après appelé troisième organe de détente 10. Ce dernier est en mesure de réduire la pression du fluide réfrigérant qu'il reçoit mais il peut également être passant, c'est-à-dire inactif du point de vue du cycle thermodynamique.

Ce troisième organe de détente 10 est raccordé à un deuxième point de bifurcation 11 où le circuit se sépare en deux portions. Ce deuxième point de bifurcation 11 est raccordé d'un côté à une entrée 14 d'un deuxième échangeur intérieur 12 et de l'autre à une troisième vanne 13.

Le deuxième échangeur intérieur 12 est un échangeur de chaleur chargé d'échanger thermiquement entre le fluide réfrigérant qui passe en son sein et soit le flux d'air intérieur 4, soit un fluide liquide caloporteur circulant dans un circuit secondaire non représenté. Ce deuxième échangeur intérieur 12 est utilisé en vue de chauffer le flux d'air intérieur 4, ou de le refroidir, en fonction d'une détente opérée ou non par le troisième organe de détente 10.

Ce deuxième échangeur intérieur 12 comprend encore une sortie 15 raccordée à un troisième point de bifurcation 16, ce dernier étant en communication avec un canal 17 installé en parallèle avec le deuxième échangeur intérieur 12, ce canal 17 étant emprunté par le fluide réfrigérant en fonction du mode de fonctionnement opéré, comme on le verra ci-dessous.

La circulation du fluide réfrigérant dans ce canal 17 est placée sous la dépendance d'une quatrième vanne 18, cette dernière étant par ailleurs raccordée à un quatrième point de bifurcation 19. La troisième vanne 13 est également raccordée à ce quatrième point de bifurcation 19.

Le circuit 1 se poursuit à partir de ce quatrième point de bifurcation 19 vers un premier organe de détente 20. Il s'agit ici d'un moyen de détente du fluide réfrigérant susceptible d'abaisser la pression de celui-ci. Ce premier organe de détente peut également laisser passer le fluide réfrigérant sans en réduire sa pression, il est alors considéré comme inactif du point de vue du cycle thermodynamique. Enfin, ce premier organe de détente 20 est réversible, c'est-à-dire capable de générer un abaissement de la pression ou d'être passant quel que soit le sens de circulation du fluide réfrigérant à son travers.

Ce premier organe de détente 20 est raccordé à un échangeur interne 21 dont la fonction est de mettre en oeuvre un échange thermique entre le fluide réfrigérant à une première température et le fluide réfrigérant à une deuxième température. Cet échangeur interne 21 comprend une première branche 22 parcourue par ce fluide réfrigérant et une deuxième branche 23 adjacente à la première branche 22 de sorte à maximiser l'échange thermique.

Le fluide réfrigérant pénètre dans la première branche 22 par un premier orifice 24 et en ressort par un deuxième orifice 25. Le premier organe de détente 20 est directement raccordé au premier orifice 24.

Le deuxième orifice 25 est directement raccordé à un deuxième organe de détente 26. Il s'agit ici d'un moyen de détente du fluide réfrigérant susceptible d'abaisser la pression de celui-ci. Ce deuxième organe de détente 26 peut également laisser passer le fluide réfrigérant sans en réduire sa pression, il est alors considéré comme inactif du point de vue du cycle thermodynamique. Enfin, ce deuxième organe de détente 26 est réversible, c'est-à-dire capable de générer un abaissement de la pression ou d'être passant quel que soit le sens de circulation du fluide réfrigérant à son travers.

Ce deuxième organe de détente 26 est raccordé à un échangeur extérieur 27. Il s'agit par exemple d'un échangeur thermique qui est qualifié d'échangeur extérieur étant donné qu'il est implanté, par exemple, sur une face avant du véhicule pour être traversé par un flux d'air extérieur à l'habitacle, référencé 28.

Cet échangeur extérieur 27 comprend un premier orifice 29 et un deuxième orifice 30 par lesquels le fluide réfrigérant entre ou sort, en fonction du mode de fonctionnement du circuit. Le circuit 1 est ainsi agencé pour inverser le sens de circulation du fluide réfrigérant entre au moins deux modes de fonctionnement.

Un tel échangeur extérieur 27 est partagé en au moins une première passe 31 qui débute au niveau du premier orifice 29 et une deuxième passe 32 raccordée directement au deuxième orifice 30. Selon un exemple de réalisation, la première passe 31 occupe, en mode pompe à chaleur, 30% de la surface frontale de l'échangeur extérieur, celle-ci correspondant à la surface par laquelle le flux d'air extérieur 28 pénètre dans l'échangeur extérieur 27. La deuxième passe 32 occupe quant à elle les 70% restant de la surface frontale.

Le deuxième orifice 30 de l'échangeur extérieur 27 est directement raccordé à un cinquième point de bifurcation 33, celui-ci étant également raccordé à la deuxième vanne 9. Ce cinquième point de bifurcation formant un « T », sa troisième branche est raccordée directement à une cinquième vanne référencée 34. Cette dernière est raccordée à un sixième point de bifurcation 35 qui est en communication par ailleurs avec, d'une part une entrée 36 de la deuxième branche 23 constitutive de l'échangeur interne 21, et d'autre part avec une sixième vanne 37 qui contrôle la circulation du fluide réfrigérant dans une portion du circuit 1 reliant le troisième point de bifurcation 16 avec le sixième point de bifurcation 35.

La deuxième branche 23 de l'échangeur interne 21 comprend également une sortie 38 directement raccordée à une entrée du compresseur 2.

On notera que les moyens selon l'invention organisent la circulation de fluide réfrigérant dans la deuxième branche dans un même sens de circulation quel que soit le mode de fonctionnement opéré.

Selon une variante, l'échangeur interne 21 peut être combiné à un dispositif d'accumulation du fluide réfrigérant, ces deux composants formant alors une pièce unitaire. Dans un tel cas, le dispositif d'accumulation est installé à l'entrée 36, en amont de la deuxième branche 23.

Selon l'invention, le circuit 1 comprend des moyens agencés pour inverser le sens de circulation du fluide réfrigérant dans la première branche 22 de l'échangeur interne 21. Selon un premier exemple de réalisation, ces moyens sont formés par une pluralité de vannes qui contrôle la circulation du fluide réfrigérant dans le circuit, ces vannes étant par exemple la première vanne 8, la deuxième vanne 9, la troisième vanne 13, la quatrième vanne 18, la cinquième vanne 34 et la sixième vanne 37. Avantageusement, ces vannes sont exclusivement des vannes deux voies. Autrement dit, le circuit ne comprend pas de vanne autre que celle décrites ci-dessus pour opérer l'inversion de sens de circulation dans la première branche 22 de l'échangeur interne 21.

Le circuit 1 de fluide réfrigérant vient d'être décrit en détails et on va maintenant s'attacher à décrire le fonctionnement de ce circuit selon les modes de fonctionnement.

La figure 2 montre l'ensemble utilisé par exemple en été, c'est-à-dire en mode de refroidissement du flux d'air intérieur 4 envoyé dans l'habitacle du véhicule.

Dans ce mode de fonctionnement, la première vanne 8, la quatrième vanne 18 et la cinquième vanne 34 sont fermées alors que la deuxième vanne 9, la troisième vanne 13 et sixième vanne 37 sont ouvertes.

Le fluide réfrigérant est comprimé et mis en circulation par le compresseur 2, puis traverse le premier échangeur intérieur 3. Le boîtier de l'installation de ventilation, chauffage et/ou climatisation est organisé pour, pendant ce mode de fonctionnement, interdire l'échange thermique entre le flux d'air intérieur 4 et le premier échangeur intérieur 3. Le fluide réfrigérant poursuit son parcours en circulant au travers du premier point de bifurcation 7 et en direction de la deuxième vanne 9.

Le fluide réfrigérant entre alors dans l'échangeur extérieur 27 par le deuxième orifice 30. Le fluide réfrigérant cède alors des calories au flux d'air extérieur 28 en circulant au travers des deuxième et première passes 32 et 31, dans ce sens.

Ce fluide réfrigérant sort ensuite de l'échangeur extérieur 27 par le premier orifice 29. Selon ce mode de refroidissement, le fluide réfrigérant circule dans l'échangeur extérieur 27 selon un premier sens de circulation où le fluide réfrigérant se déplace depuis le deuxième orifice 30 vers le premier orifice 29 de l'échangeur extérieur 27.

Le fluide réfrigérant continue son parcours et traverse le deuxième organe de détente 26 selon le premier sens de circulation et sans que ce deuxième organe de détente n'opère d'abaissement de la pression du fluide réfrigérant. Le deuxième organe de détente 26 est ainsi passant selon ce premier sens de circulation.

La température du fluide réfrigérant est ainsi identique entre le premier orifice 29 de l'échangeur extérieur 27 et le deuxième orifice 25 de la première branche 22 de l'échangeur interne 21.

Le fluide réfrigérant traverse cette première branche 22 selon le premier sens de circulation, c'est-à-dire en provenance du deuxième orifice 25 et vers le premier orifice de la deuxième branche 22 de l'échangeur interne 21.

Le fluide réfrigérant rejoint le premier organe de détente 20 où celui-ci opère une détente du fluide réfrigérant, c'est-à-dire un abaissement de la pression du fluide réfrigérant.

Le fluide réfrigérant arrive ensuite au quatrième point de bifurcation 19 et poursuit son chemin en traversant la troisième vanne 13 selon le premier sens de circulation.

Le deuxième échangeur intérieur 12 se comporte alors comme un évaporateur où il capte les calories présentes dans le flux d'air intérieur 4 envoyé dans l'habitacle. Le flux d'air intérieur 4 est ainsi refroidit. Le fluide réfrigérant entre donc dans ce deuxième échangeur intérieur 12 par son entrée 14 et en sort par sa sortie 15 pour rejoindre la sixième vanne 37 après avoir traversé le troisième point de bifurcation 16.

Au sixième point de bifurcation 35, le fluide réfrigérant est dirigé vers l'entrée 36 de la deuxième branche 23 de l'échangeur interne 21.

A ce stade, le fluide réfrigérant à haute pression et haute température qui circule dans la première branche 22 échange thermiquement avec le fluide réfrigérant à basse pression et basse température qui circule dans la deuxième branche 23 de l'échangeur interne.

Avantageusement, le sens de circulation du fluide réfrigérant dans les deux branches de l'échangeur interne 21 est opposé. L'échange thermique est ainsi à contre-courant.

Enfin, le fluide réfrigérant sort de la deuxième branche 23 pour retourner vers le compresseur 2, en vue d'effectuer un nouveau cycle.

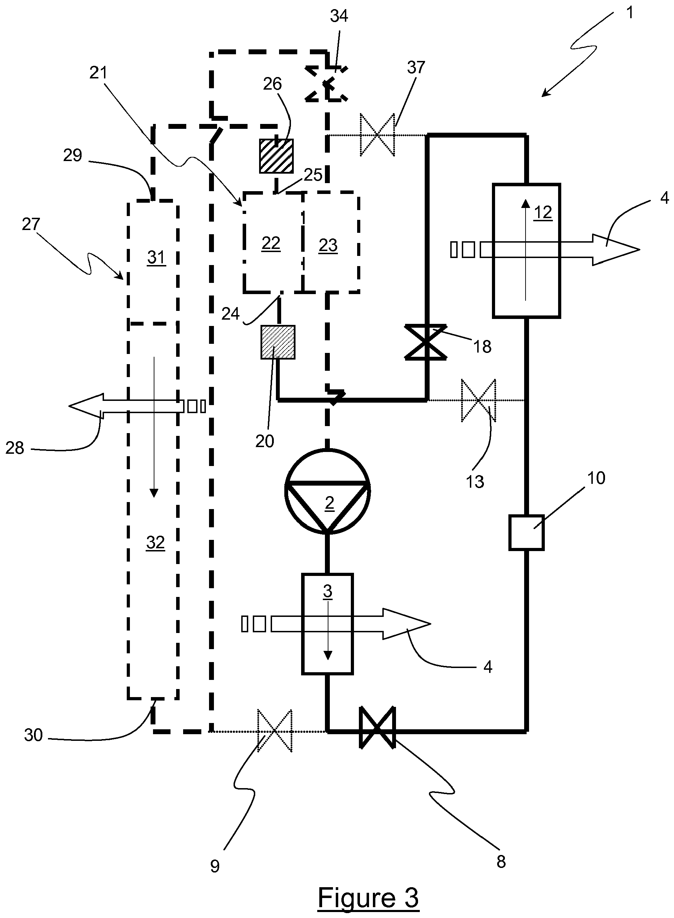

La figure 3 illustre le circuit selon l'invention pendant une phase de fonctionnement correspondant à un premier mode de chauffage du flux d'air intérieur 4 envoyé dans l'habitacle. La description ci-dessous s'attache aux différences et on se reportera à la description des figures 1 ou 2 pour les éléments identiques.

Une particularité de ce mode de fonctionnement réside dans le fait que le premier échangeur intérieur 3 et le deuxième échangeur intérieur 12 fonctionnent à un même niveau de pression, c'est-à-dire la haute pression.

Dans ce mode fonctionnement, on ferme la deuxième vanne 9, la troisième vanne 13 et la sixième vanne 36. En revanche, la première vanne 8, la quatrième vanne 18 et la cinquième vanne 34 sont ouvertes. Le troisième organe de détente 10 est passant, le premier organe de détente 20 génère une détente intermédiaire et le deuxième organe de détente 26 génère une détente complémentaire pour amener le fluide réfrigérant à basse pression.

Le premier échangeur intérieur 3 échange thermiquement avec le flux d'air intérieur 4 ce qui permet de chauffer ce dernier. Il s'agit ici d'un premier étage de chauffage généré par le fluide réfrigérant à très haute température, immédiatement en aval du compresseur 2.

Le fluide réfrigérant traverse la première vanne 8 puis le troisième organe de détente 10, ce dernier étant passant de sorte à ne pas générer d'abaissement de pression du fluide réfrigérant. Le fluide réfrigérant traverse ensuite le deuxième échangeur intérieur 12 qui à son tour chauffe le flux d'air intérieur 4 qui passe à son travers. Il s'agit alors d'un étage de chauffage supplémentaire qui augmente la quantité globale de calories cédées au flux d'air intérieur 4.

Le fluide réfrigérant parcourt ensuite le canal 17, traverse la quatrième vanne 18 et rejoint le premier organe de détente 20. Ce premier organe de détente 20 est placé dans une position où il génère une détente intermédiaire afin que le fluide réfrigérant qui entre dans la première branche 22 par le premier orifice 24 soit soumis à une pression intermédiaire, c'est-à-dire supérieure à la basse pression mais inférieure à la haute pression.

Le fluide réfrigérant circule dans la première branche 22 à partir du premier orifice 24 et vers le deuxième orifice 25 selon un second sens de circulation, opposé au premier sens de circulation mis en oeuvre dans la première branche de l'échangeur interne en mode de refroidissement. Le fluide réfrigérant arrive ensuite au niveau du deuxième organe de détente 26. Ce dernier abaisse la pression du fluide réfrigérant depuis la pression intermédiaire vers la basse pression.

Le fluide réfrigérant poursuit son parcours et entre dans l'échangeur extérieur 27 par le premier orifice 29 pour en ressortir par le deuxième orifice 30. On constate ainsi que le sens de circulation du fluide réfrigérant dans l'échangeur extérieur 27 pendant ce premier mode de chauffage est opposé au sens de circulation du fluide réfrigérant dans ce même échangeur exploité en mode de refroidissement.

Le fluide réfrigérant traverse ainsi d'abord la première passe 31, puis la deuxième passe 32 avant de sortir de l'échangeur par le deuxième orifice 30, ce qui permet de réduire les pertes de charges dans la deuxième passe 32 et d'atteindre une efficience de l'échangeur extérieur 27 en mode évaporateur.

Le fluide réfrigérant emprunte ensuite une canalisation pour rejoindre la cinquième vanne 34 et ensuite atteindre la deuxième branche 23 de l'échangeur interne 21.

Un échange thermique prend ainsi place entre le fluide réfrigérant qui circule dans la première branche 22 et le fluide réfrigérant qui circule dans la deuxième branche 23. Le fait de disposer d'un premier organe de détente 20 en amont de la première branche 22 selon ce premier mode de chauffage permet de moduler cet échange thermique et ainsi d'influencer la température du fluide réfrigérant qui entre dans le compresseur 2. On évite ainsi que la température du fluide réfrigérant dans la deuxième branche 23 ne soit trop élevée par échange avec le fluide réfrigérant présent dans la première branche 22. Le deuxième organe de détente 26 assure le cycle thermodynamique en abaissant la température du fluide réfrigérant afin que le flux d'air extérieur 28 chauffe le fluide réfrigérant qui traverse l'échangeur extérieur 27.

Le sens de circulation du fluide réfrigérant dans la deuxième branche 23 est identique entre ce premier mode de chauffage et le mode de refroidissement. En revanche, le sens de circulation du fluide réfrigérant dans la première branche 22 est identique au sens de circulation en mode de refroidissement.

L'échange thermique entre la première branche 22 et la deuxième branche 23 de l'échangeur interne 21 est alors à co-courant.

Le fluide réfrigérant rejoint ensuite l'entrée du compresseur 2.

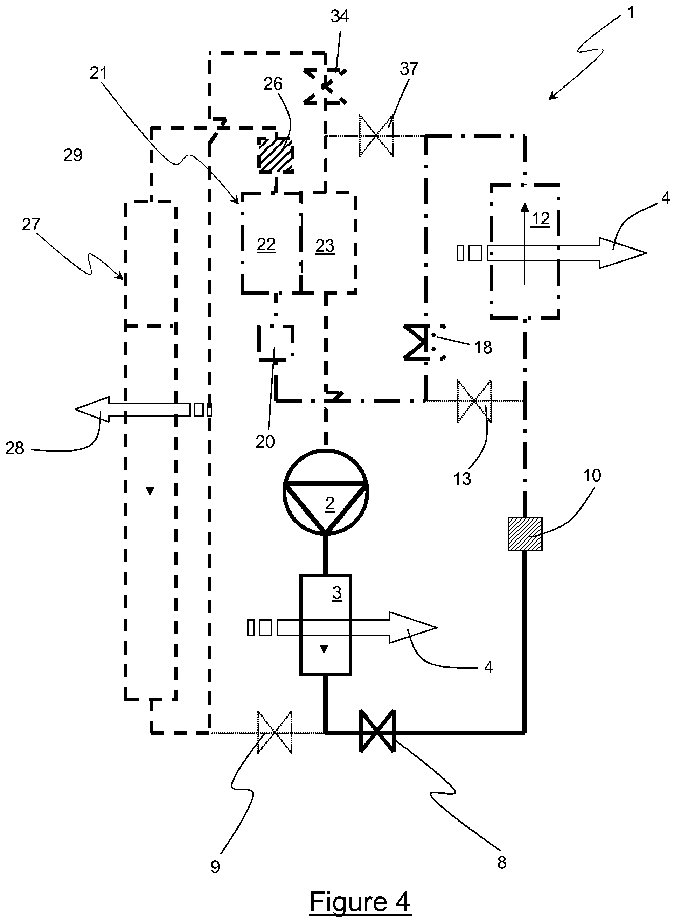

La figure 4 illustre le circuit selon l'invention pendant une phase de fonctionnement correspondant à un deuxième mode de chauffage du flux d'air intérieur 4 envoyé dans l'habitacle. La description ci-dessous s'attache aux différences et on se reportera à la description des figures 1 ou 3 pour les éléments identiques.

Une particularité de ce mode de fonctionnement réside dans le fait que le deuxième échangeur intérieur est traversé par le fluide réfrigérant à une pression intermédiaire, c'est-à-dire inférieure à la pression du fluide réfrigérant dans le premier échangeur intérieur 3.

Dans ce mode fonctionnement, on ferme la deuxième vanne 9, la troisième vanne 13 et la sixième vanne 36. En revanche, la première vanne 8, la quatrième vanne 18 et la cinquième vanne 34 sont ouvertes. Le troisième organe de détente 10 génère une détente intermédiaire, le premier organe de détente 20 est passant et le deuxième organe de détente 26 génère une détente complémentaire pour amener le fluide réfrigérant à basse pression.

On abaisse la pression du fluide réfrigérant pour que la température du flux d'air intérieur 4 en sortie du deuxième échangeur intérieur 12 soit proche de 0° alors que la température de ce même flux d'air intérieur 4 en amont de cet échangeur est positive, notamment en prélevant l'air dans l'habitacle plutôt qu'à l'extérieur de celui-ci. Ce deuxième échangeur intérieur 12 se comporte alors comme un refroidisseur de gaz, ou condenseur, et participe ainsi à la réalisation du cycle thermodynamique. Il vient en soutient de l'échange thermique réalisé par l'échangeur extérieur 27.

Le premier organe de détente 20 est passant si bien que la première branche 22 de l'échangeur interne 21 est à pression intermédiaire, comme pour le premier mode de chauffage évoqué ci-dessus, le reste du circuit étant identique.

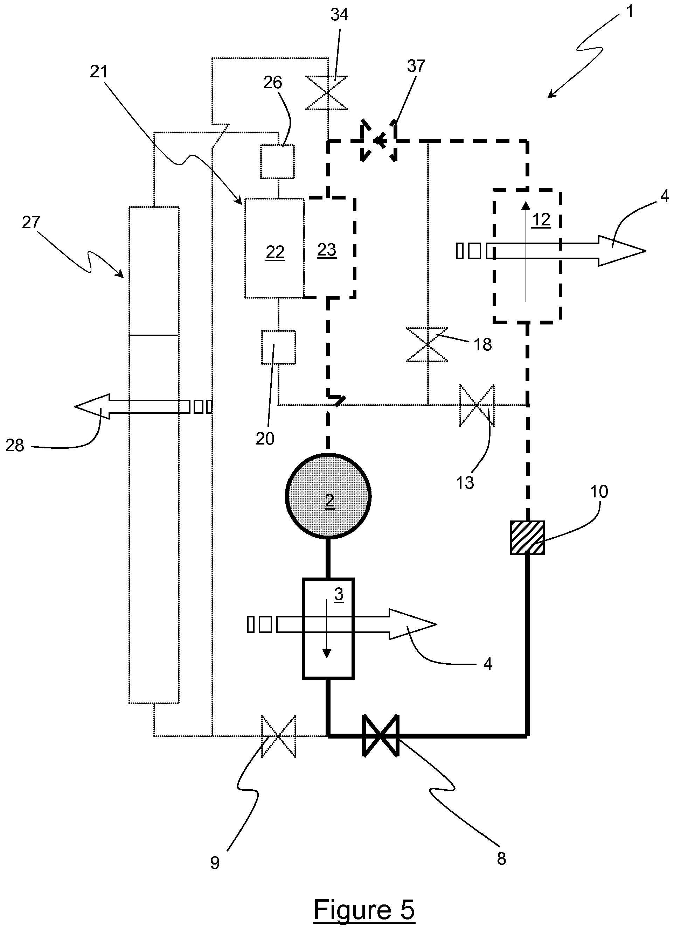

La figure 5 montre le circuit selon l'invention dans un mode de récupération de l'énergie présente dans le flux d'air intérieur 4. Un tel mode est par exemple utilisé quand la température du flux d'air extérieur 4 rend inopérant l'utilisation de l'échangeur extérieur 27, notamment lorsque ce dernier est obstrué par du givre. Le cycle thermodynamique du fluide réfrigérant est alors opéré en utilisant le premier échangeur intérieur 3 en tant que refroidisseur de gaz ou condenseur, traversé par le flux d'air intérieur 4 issu ou provenant de l'habitacle du véhicule. Un radiateur électrique de chauffage (non représenté) amorce alors le cycle thermodynamique. Le deuxième échangeur intérieur 12 joue alors le rôle d'évaporateur, le fluide réfrigérant captant les calories présentes dans le flux d'air intérieur 4.

Selon ce mode de fonctionnement, la deuxième vanne 9, la troisième vanne 13, la quatrième vanne 18, et la cinquième vanne 34 sont fermées alors que la première vanne 8 et la sixième vanne 37 sont ouvertes. Par conséquent, le fluide réfrigérant ne circule pas dans la première branche 22 de l'échangeur interne 21 et dans l'échangeur extérieur 27. Le troisième organe de détente 10 génère une détente intermédiaire, le premier organe de détente 20 et le deuxième organe de détente 26 n'étant pas parcourus par le fluide réfrigérant.

Le fluide réfrigérant mis en circulation par le compresseur 2 traverse le premier échangeur intérieur 3. Ce faisant, le fluide réfrigérant échange avec le flux d'air intérieur 4 et cède des colories à ce dernier. Le fluide réfrigérant traverse ensuite la première vanne 8 et rejoint le troisième organe de détente 10.

Ce troisième organe de détente 10 abaisse la pression du fluide réfrigérant et celui-ci traverse ensuite le deuxième échangeur intérieur 12. Le flux d'air intérieur 4 est alors refroidi.

Le fluide réfrigérant retourne ensuite au compresseur 2 en traversant successivement la sixième vanne 37 puis la deuxième branche 23 de l'échangeur interne 21.

On remarque que la première branche 22 n'est pas traversée par le fluide réfrigérant.

La troisième vanne 13 présente une fonction supplémentaire. En, effet, La quantité de fluide réfrigérant non-circulante et stockée dans la portion du circuit constituée de l'échangeur extérieur 27, du premier organe de détente 20, du deuxième organe de détente 26 et de la première branche 22 de l'échangeur interne 21 peut subir des changements de pression. Bien qu'inactif, l'échangeur extérieur 27 est traversé par le flux d'air extérieur 28 et la température de ce dernier peut augmenter ou diminuer brutalement, par exemple lors d'une circulation dans un tunnel où cette température augmente. Ceci se traduit par une augmentation de la pression dans cette portion du circuit, qui peut atteindre une valeur supérieure à la valeur autorisée.

Pour limiter cet inconvénient, la troisième vanne 13 est ouverte temporairement pour autoriser un équilibrage de pression entre la portion inactive du circuit et la portion active de ce dernier. En fonction de la température, le fluide réfrigérant peut alors circuler dans un sens ou dans l'autre.

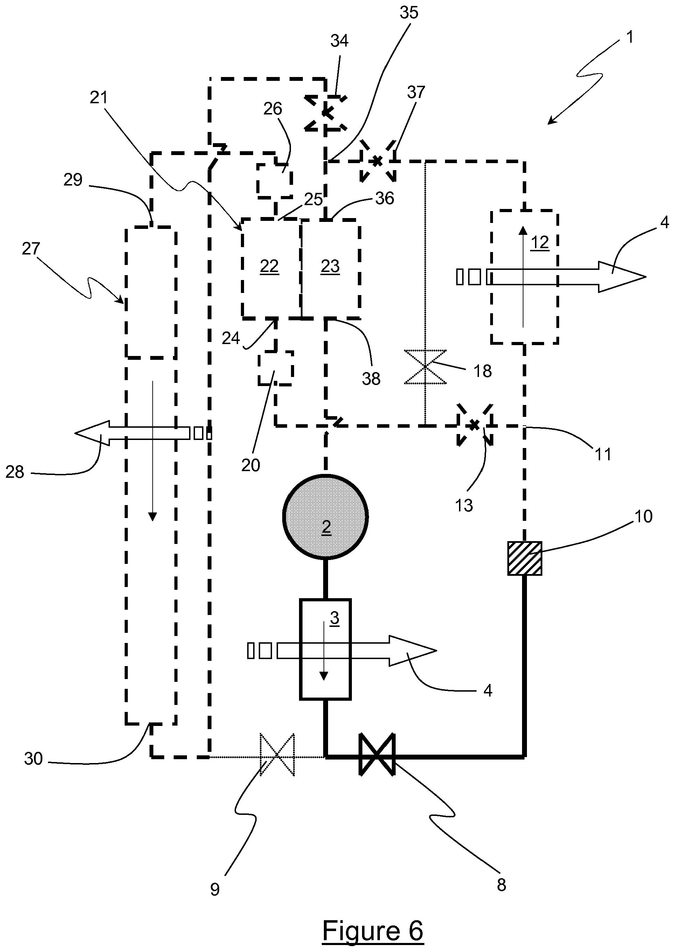

La figure 6 illustre un mode de fonctionnement où le deuxième échangeur intérieur 12 et l'échangeur extérieur 27 sont en parallèle vis-à-vis de l'échangeur interne 21. Ce mode de fonctionnement correspond à un mode de déshumidification du flux d'air intérieur 4, c'est-à-dire un mode où le premier échangeur intérieur 3 assure une fonction de chauffage du flux d'air intérieur 4 ainsi qu'un refroidissement de celui-ci, au moyen du deuxième échangeur intérieur 12.

Selon ce mode de fonctionnement, la deuxième vanne 9 et la quatrième vanne 18 sont fermées alors que la première vanne 8, la troisième vanne 13, la cinquième vanne 34 et la sixième vanne 37 sont ouvertes. Par conséquent, le fluide réfrigérant circule en même temps dans la première branche 22 de l'échangeur interne 21 et dans le deuxième échangeur intérieur 12. Le troisième organe de détente 10 génère une détente intermédiaire, le premier organe de détente 20 génère une détente complémentaire pour amener le fluide réfrigérant à basse pression, et le deuxième organe de détente 26 est passant.

Le premier échangeur intérieur 3 est traversé par le fluide réfrigérant à haute température et haute pression et dissipe les calories de celui-ci dans le flux d'air intérieur 4. Le troisième organe de détente 10 est actif en ce sens qu'il assure une détente du fluide réfrigérant pour atteindre une basse pression. Au deuxième point de bifurcation 11, le fluide réfrigérant se dirige à la fois vers la troisième vanne 13 et vers le deuxième échangeur intérieur 12, ce dernier assurant alors un assèchement du flux d'air intérieur 4 par refroidissement de celui-ci. Le fluide réfrigérant poursuit son parcours et traverse la sixième vanne 37 pour rejoindre le sixième point de bifurcation 35. La répartition des débits entre les deux branches dépendra alors des pertes de charges des deux circuits.

Le premier organe de détente 20 et le deuxième organe de détente 26 sont passants, c'est-à-dire inactifs du point de vue du cycle thermodynamique, autorisant ainsi une circulation du fluide réfrigérant dans l'échangeur extérieur 27 selon le second sens de circulation, autrement dit depuis le premier orifice 29 vers le deuxième orifice 30 de cet échangeur extérieur 27.

Le fluide réfrigérant rejoint la cinquième vanne 34, puis se mélange au niveau du sixième point de bifurcation 35 avec le fluide réfrigérant qui provient de la sixième vanne 37. Ce fluide traverse ensuite la deuxième branche 23 de l'échangeur interne 21 en pénétrant par l'entrée 36 pour en sortir par la sortie 38 et rejoindre le compresseur 2.

Les moyens selon l'invention permettent ainsi une circulation du fluide réfrigérant à co-courant dans la première branche 22 par rapport à la deuxième branche 23 de l'échangeur interne 21.

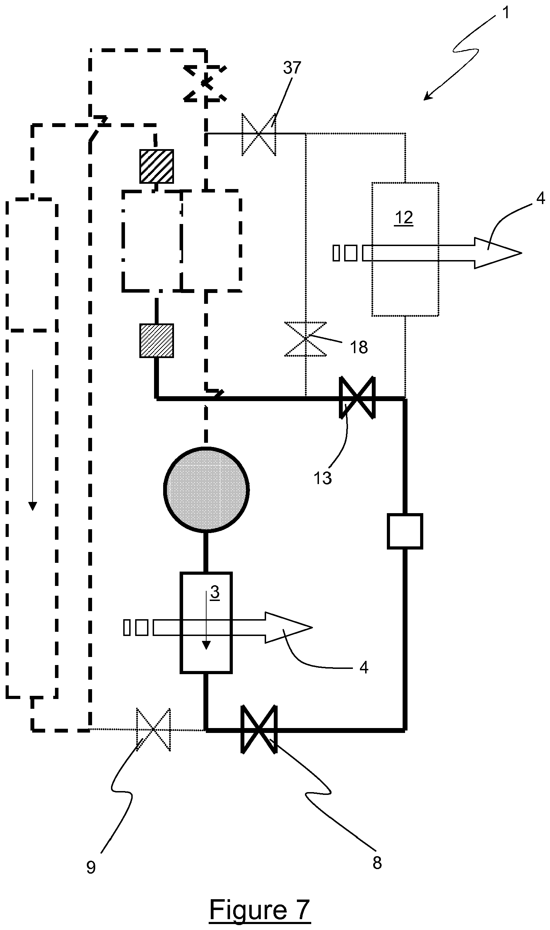

La figure 7 montre un mode de fonction appelé post-refroidissement. Ce mode évite l'inconvénient suivant. Quand le deuxième échangeur intérieur 12 est employé pour refroidir le flux d'air intérieur 4, par exemple selon le mode de refroidissement présenté à la figure 2, la surface de cet échangeur est au moins en partie couverte de gouttelettes d'eau. Le passage en un mode de chauffage immédiatement après ce mode de refroidissement provoque une évaporation de cette eau dans le flux d'air intérieur 4. Une telle situation provoque une buée sur les vitres de l'habitacle du véhicule qui gène la visibilité du conducteur.

L'invention propose ce mode de post-refroidissement entre le moment où le deuxième échangeur intérieur 12 est utilisé pour refroidir le flux d'air et le moment où un mode de chauffage est activé. Les moyens selon l'invention interdisent, pendant ce mode de post-refroidissement, toute circulation du fluide réfrigérant dans le deuxième échangeur intérieur 12. Pour ce faire, la troisième vanne 13 est ouverte, alors que la quatrième vanne 18 et la sixième vanne 37 sont fermées. On notera enfin que le chauffage du flux d'air intérieur 4 est néanmoins assuré par le premier échangeur 3. On comprend ainsi que les gouttelettes d'eau ne sont ainsi pas chauffées par le fluide réfrigérant chaud, ce qui limite l'évaporation de cette eau dans le flux d'air intérieur 4. En revanche, la circulation du flux d'air intérieur 4 au travers du deuxième échangeur 12 évacue ces gouttelettes, de sorte que le premier mode de chauffage peut être mis en fonctionnement plus tôt.

Selon ce mode de fonctionnement, la deuxième vanne 9, la quatrième vanne 18, et la sixième vanne 37 sont fermées alors que la première vanne 8, la troisième vanne 13 et la cinquième vanne 34 sont ouvertes. Le troisième organe de détente 10 est passant, le premier organe de détente 20 génère une détente intermédiaire et le deuxième organe de détente 26 génère une détente complémentaire pour amener le fluide réfrigérant à basse pression.

Pour le reste de la description de la circulation du fluide réfrigérant selon ce mode de fonctionnement, on se reportera à la figure 3 correspondant au premier mode de chauffage.

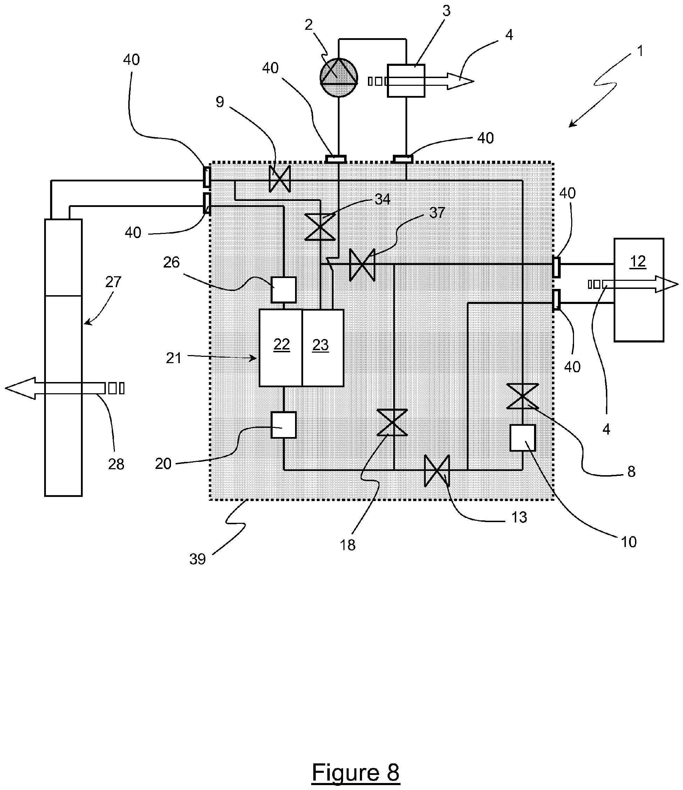

La figure 8 montre un exemple de réalisation du circuit 1 selon l'invention. Il a été fait le choix de rassembler un certain nombre de composants du circuit 1 sur ou dans un même châssis 39, alors que d'autres composants sont volontairement installés séparément de ce châssis, en dehors des tubes qui relient ces composants au châssis. Un tel choix permet de standardiser la fabrication du châssis et de ces composants pour l'installer sur différents types de véhicule qui présentent des composants externes qui ne sont pas nécessairement identique.

Ainsi, le châssis 39 est une pièce métallique ou plastique. Les composants intégrés à ce châssis, appelés composant internes au châssis, sont : les moyens, c'est-à dire les six vannes deux voies référencées 8, 9, 13, 18, 34 et 37, les trois organes de détente 10, 20 et 26 et l'échangeur interne 21. Le châssis 39 comprend des conduits réalisés entre chacun de ces composants, conformément au circuit 1 présenté à la figure 1.

Les composants situés à l'extérieur de ce châssis, appelés composants externes au châssis, sont : le compresseur 2, le premier échangeur intérieur 3, le deuxième échangeur intérieur 12 et l'échangeur extérieur 27. On notera que le châssis 39 comprend des orifices d'entrée et de sortie 40 destinés à être reliés à ces composants externes.

La description ci-dessus emploi le terme « directement » pour qualifier la position d'un composant par rapport à un autre. Ce terme doit être compris en ce sens qu'un premier composant considéré est adjacent à un deuxième composant considéré, ou éventuellement relié l'un à l'autre exclusivement par un moyen de transport de fluide réfrigérant qui prend, par exemple, la forme d'un conduit ou d'un tube, notamment flexible ou rigide. Autrement dit, le premier composant considéré est relié au deuxième composant considéré par un moyen inactif au regard du cycle thermodynamique qui s'opère dans le circuit.

## Revendications

1. Circuit (1) apte à être parcouru par un fluide réfrigérant, comprenant un compresseur (2), un premier échangeur intérieur (3) destiné à chauffer un flux air intérieur (4) envoyé dans un habitacle de véhicule automobile, un deuxième échangeur intérieur (12) destiné à chauffer ou refroidir ledit flux d'air intérieur (4), un échangeur interne (21) comprenant une première branche (22) apte à être parcourue par le fluide réfrigérant et qui échange thermiquement avec une deuxième branche (23) de l'échangeur interne (21) apte à être parcourue par le fluide réfrigérant, et un échangeur extérieur (27), et comprenant des moyens (8, 9, 13, 18, 34, 37) agencés pour inverser le sens de circulation du fluide réfrigérant dans la première branche (22) de l'échangeur interne (21), un premier organe de détente (20) étant raccordé à un premier orifice (24) de la première branche (22) et un deuxième organe de détente (26) est raccordé à un deuxième orifice (25) de la première branche (22), **caractérisé en ce qu'**un troisième organe de détente (10) est installé entre une sortie du premier échangeur intérieur (3) et une entrée (14) du deuxième échangeur intérieur (12).

2. Circuit selon la revendication 1, dans lequel les moyens (8, 9, 13, 18, 34, 37) sont agencés pour inverser le sens de circulation du fluide réfrigérant dans l'échangeur extérieur (27).

3. Circuit selon l'une quelconque des revendications 1 à 2, dans lequel les moyens (8, 9, 13, 18, 34, 37) comprennent exclusivement des vannes deux voies.

4. Circuit selon l'une quelconque des revendications précédentes, dans lequel le premier organe de détente (20) et le deuxième organe de détente (26) sont réversibles.

5. Circuit selon l'une quelconque des revendications précédentes, dans lequel est prévu un canal (17) en parallèle du deuxième échangeur intérieur (12).

6. Circuit selon l'une quelconque des revendications précédentes, dans lequel les moyens (8, 9, 13, 18, 34, 37) sont agencés pour que le fluide réfrigérant circule dans un même sens de circulation au sein de la deuxième branche (23) de l'échangeur interne (21).

7. Procédé de commande d'un circuit (1) selon l'une quelconque des revendications précédentes, dans lequel les moyens (8, 9, 13, 18, 34, 37) sont commandés pour que le fluide réfrigérant circule selon un premier sens de circulation dans la première branche (22) de l'échangeur interne (21) quand le circuit (1) fonctionne selon un mode de refroidissement du flux d'air intérieur (4) envoyé dans l'habitacle, et dans un deuxième sens opposé au premier sens quand le circuit (1) fonctionne au moins en un mode de chauffage dudit flux d'air intérieur (4).

8. Procédé selon la revendication 7, dans lequel le circuit (1) fonctionne en un mode de déshumidification dudit flux d'air intérieur et en un mode de post-refroidissement, la première branche (22) de l'échangeur interne (21) étant parcouru selon le deuxième sens.

## Patentansprüche

1. Kreislauf (1), der von einem Kühlfluid durchflossen werden kann, der einen Kompressor (2), einen ersten inneren Tauscher (3), der dazu bestimmt ist, einen inneren Luftstrom (4) zu erwärmen, der in einen Kraftfahrzeuginnenraum geschickt wird, einen zweiten inneren Tauscher (12), der dazu bestimmt ist, den inneren Luftstrom (4) zu erwärmen oder zu kühlen, einen internen Tauscher (21), der einen ersten Zweig (22) enthält, der vom Kühlfluid durchflossen werden kann und der in Wärmeaustausch mit einem zweiten Zweig (23) des internen Tauschers (21) steht, der vom Kühlfluid durchflossen werden kann, und einen äußeren Tauscher (27) enthält, und Einrichtungen (8, 9, 13, 18, 34, 37) enthält, die eingerichtet sind, um die Strömungsrichtung des Kühlfluids im ersten Zweig (22) des internen Tauschers (21) umzukehren, wobei ein erstes Expansionsorgan (20) an eine erste Öffnung (24) des ersten Zweigs (22) und ein zweites Expansionsorgan (26) an eine zweite Öffnung (25) des ersten Zweigs (22) angeschlossen ist, **dadurch gekennzeichnet, dass** ein drittes Expansionsorgan (10) zwischen einem Ausgang des ersten inneren Tauschers (3) und einem Eingang (14) des zweiten inneren Tauschers (12) eingebaut ist.

2. Kreislauf nach Anspruch 1, wobei die Einrichtungen (8, 9, 13, 18, 34, 37) eingerichtet sind, um die Strömungsrichtung des Kühlfluids im äußeren Tauscher (27) umzukehren.

3. Kreislauf nach einem der Ansprüche 1 bis 2, wobei die Einrichtungen (8, 9, 13, 18, 34, 37) ausschließlich Zweiwegeventile enthalten.

4. Kreislauf nach einem der vorhergehenden Ansprüche, wobei das erste Expansionsorgan (20) und das zweite Expansionsorgan (26) umkehrbar sind.

5. Kreislauf nach einem der vorhergehenden Ansprüche, wobei ein Kanal (17) parallel zum zweiten inneren Tauscher (12) vorgesehen ist.

6. Kreislauf nach einem der vorhergehenden Ansprüche, wobei die Einrichtungen (8, 9, 13, 18, 34, 37) eingerichtet sind, damit das Kühlfluid in der gleichen Strömungsrichtung innerhalb des zweiten Zweigs (23) des internen Tauschers (21) strömt.

7. Verfahren zur Steuerung eines Kreislaufs (1) nach einem der vorhergehenden Ansprüche, wobei die Einrichtungen (8, 9, 13, 18, 34, 37) so gesteuert werden, dass das Kühlfluid im ersten Zweig (22) des internen Tauschers (21) gemäß einer ersten Strömungsrichtung strömt, wenn der Kreislauf (1) gemäß einem Kühlmodus des inneren Luftstroms (4) arbeitet, der in den Innenraum geschickt wird, und in einer zweiten Richtung entgegengesetzt zur ersten strömt, wenn der Kreislauf (1) mindestens in einem Heizmodus des inneren Luftstroms (4) arbeitet.

8. Verfahren nach Anspruch 7, wobei der Kreislauf (1) in einem Entfeuchtungsmodus des inneren Luftstroms und in einem Nachkühlungsmodus arbeitet, wobei der erste Zweig (22) des internen Tauschers (21) gemäß der zweiten Richtung durchflossen wird.

## Claims

1. Circuit (1) through which a refrigerant can pass, comprising a compressor (2), a first interior exchanger (3) intended to heat an interior air flow (4) sent into an interior of a motor vehicle, a second interior exchanger (12) intended to heat or cool the said interior air flow (4), an internal exchanger (21) comprising a first leg (22) through which the refrigerant can pass and which exchanges heat with a second leg (23) of the internal exchanger (21) through which the refrigerant can pass, and an exterior exchanger (27), and comprising means (8, 9, 13, 18, 34, 37) designed to reverse the direction in which the refrigerant circulates in the first leg (22) of the internal exchanger (21), a first expansion member (20) being connected to a first port (24) of the first leg (22) and a second expansion member (26) is connected to a second port (25) of the first leg (22), **characterized in that** a third expansion member (10) is installed between an outlet of the first interior exchanger (3) and an inlet (14) of the second interior exchanger (12).

2. Circuit according to Claim 1, in which the means (8, 9, 13, 18, 34, 37) are designed to reverse the direction in which the refrigerant circulates in the exterior exchanger (27).

3. Circuit according to either one of Claims 1 and 2, in which the means (8, 9, 13, 18, 34, 37) comprise exclusively two-way valves.

4. Circuit according to any one of the preceding claims, in which the first expansion member (20) and the second expansion member (26) are reversible.

5. Circuit according to any one of the preceding claims, in which there is a canal (17) in parallel with the second interior exchanger (12).

6. Circuit according to any one of the preceding claims, in which the means (8, 9, 13, 18, 34, 37) are designed so that the refrigerant circulates in the one same direction of circulation within the second leg (23) of the internal exchanger (21).

7. Method for controlling a circuit (1) according to any one of the preceding claims, in which the means (8, 9, 13, 18, 34, 37) are controlled in such a way that the refrigerant circulates in a first direction of circulation in the first leg (22) of the internal exchanger (21) when the circuit (1) is operating in a mode of cooling the interior air flow (4) sent into the vehicle interior, and in a second direction the opposite of the first direction when the circuit (1) is operating at least in a mode of heating the said interior air flow (4).

8. Method according to Claim 7, in which the circuit (1) operates in a mode of dehumidifying the said interior air flow and in a post-cooling mode, the first leg (22) of the internal exchanger (21) being passed through in the second direction.
